Europäisches Patentamt

**European Patent Office**

**Office européen des brevets**

(11) Numéro de publication: **0 285 513 B1**

(12) **FASCICULE DE BREVET EUROPEEN**

(45) Date de publication de fascicule du brevet: **11.11.92** (51) Int. Cl.⁵: **H02H 7/00**

(21) Numéro de dépôt: **88400763.4**

(22) Date de dépôt: **29.03.88**

(54) **Dispositifs de détection de transitions vers l'etat normal dans un bobinage supraconducteur, notamment de génératrice électrique, et de protection d'un tel bobinage.**

(30) Priorité: **30.03.87 FR 8704404**

(43) Date de publication de la demande:
**05.10.88 Bulletin 88/40**

(45) Mention de la délivrance du brevet:
**11.11.92 Bulletin 92/46**

(84) Etats contractants désignés:
**AT BE CH DE ES FR GB GR IT LI LU NL SE**

(56) Documents cités:
**FR-A- 2 224 909**
**US-A- 4 375 659**

**PATENT ABSTRACTS OF JAPAN, vol. 9, no. 288 (E-358)[2011], 15 novembre 1985, page 132 E 358; & JP-A-60 130 107 (TOSHIBA K.K.) 11-07-1985**

(73) Titulaire: **GEC ALSTHOM SA**
**38, avenue Kléber**
**F-75116 Paris(FR)**

(72) Inventeur: **Tixador, Pascal**
**16, rue Condorcet**
**F-38000 Grenoble(FR)**
Inventeur: **Brunet, Yves**
**24 rue Jean-Jaurès**
**F-38610 Gieres(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne un dispositif de détection de transitions de conducteurs de l'état supraconducteur à l'état normal dans un bobinage supraconducteur à fréquence industrielle, notamment pour induit de génératrice électrique.

Elle s'étend en outre à un dispositif de protection d'un tel bobinage faisant appel à un tel dispositif de détection.

Compte tenu du caractère extrêmement rapide du passage d'un supraconducteur à l'état normal dans le cas de l'apparition d'un défaut, il convient d'assurer une détection également très rapide pour couper ou limiter le courant afin d'éviter la destruction de ces bobinages.

Un moyen de détecter de telles transitions serait d'observer le déphasage entre le courant et la tension, qui varie fortement lorsque les conducteurs du bobinage repassent à l'état normal, comme décrit dans FR-A-2 224909. Une telle détection est toutefois assez peu fiable, car ce déphasage dépend de la charge de la génératrice.

La présente invention a pour but de procurer un dispositif de détection de transitions de conducteurs dans des bobinages supraconducteurs qui réagisse immédiatement et qui présente une fiabilité élevée, tout en restant simple, et qui permette une protection efficace de ces bobinages contre leur destruction ou leur endommagement.

L'invention a donc pour objet un dispositif de détection de transitions de conducteurs de l'état supraconducteur à l'état normal dans un bobinage supraconducteur parcouru par un courant à fréquence industrielle, notamment pour induit de génératrice électrique, le dispositif comprenant des moyens détecteurs d'une variation de déphasage entre courant et tension dans le bobinage supraconducteur, caractérisé en ce qu'il comporte une génératrice auxiliaire d'un courant d'intensité plus faible que celle du courant principal parcourant le bobinage et de fréquence plus élevée que la fréquence industrielle, monophasé ou polyphasé selon que le courant principal parcourant le bobinage est monophasé ou polyphasé, montée en parallèle avec le bobinage supraconducteur, lesdits moyens détecteurs détectant, à la fréquence du courant auxiliaire, la variation du déphasage entre intensité et tension du courant auxiliaire lorsque des conducteurs de ce bobinage passent à l'état normal, ces moyens détecteurs de variation du déphasage étant constitués par une capacité de découplage en série avec la génératrice de courant auxiliaire, d'une valeur telle relativement à l'inductance inverse du bobinage supraconducteur qu'elle corresponde à la résonance à la fréquence du courant auxiliaire, et par des moyens pour détecter l'apparition d'une tension aux bornes de la génératrice du courant auxiliaire.

Le dispositif comprend en outre avantageusement un circuit bouchon pour la fréquence du courant auxiliaire disposé entre la génératrice auxiliaire et le réseau relié au bobinage, de façon à protéger le réseau des perturbations que pourraient entraîner les courants de mesure.

Un premier dispositif selon l'invention de protection d'un bobinage supraconducteur à fréquence industrielle contre un échauffement excessif résultant du passage de conducteurs du bobinage à l'état normal, comprend un interrupteur commandé par le dispositif de détection tel que défini ci-dessus, et en outre un triac monté en série avec une résistance de décharge et disposé en parallèle avec le bobinage à protéger, ce triac étant aussi commandé par le dispositif de détection.

Un autre dispositif selon l'invention de protection d'un bobinage supraconducteur à fréquence industrielle comprend un interrupteur commandé par le dispositif de détection tel que défini ci-dessus et en outre une varistance en parallèle avec le bobinage à protéger.

Il est décrit ci-après, à titre d'exemples et en référence aux figures du dessin annexé, un dispositif de détection de transitions de conducteurs dans un bobinage supraconducteur de machine synchrone et des dispositifs de protection commandés par un tel dispositif de détection.

La figure 1 représente un dispositif de détection de transitions dans un induit de machine synchrone à bobinage supraconducteur.

La figure 2 représente un dispositif de protection à triac.

La figure 3 représente un dispositif de protection à varistance.

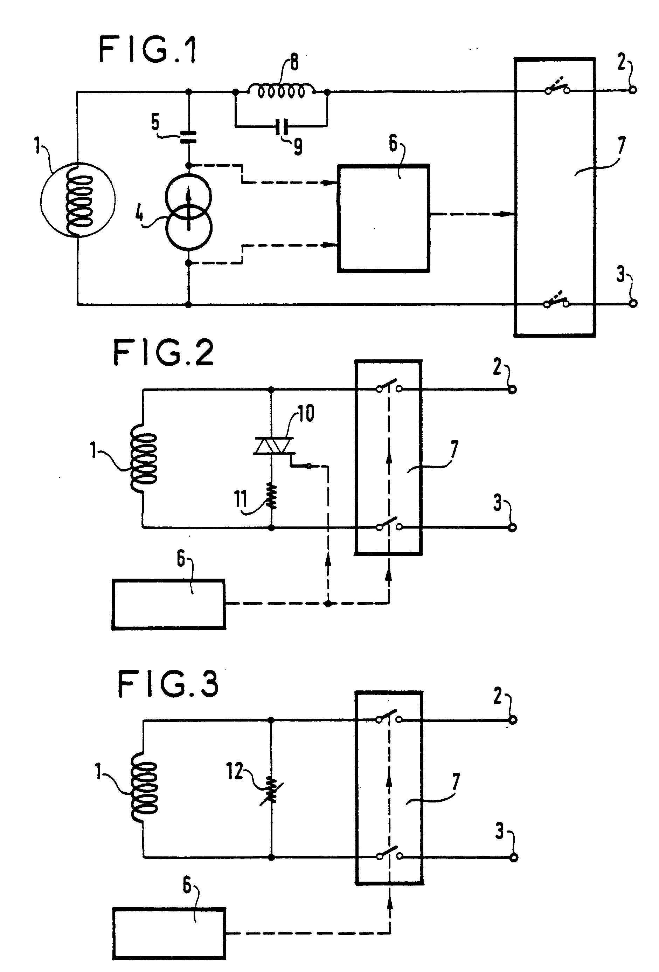

La figure 1 représente le principe de la détection. On superpose à la génératrice principale 1 de courant triphasé à 50 ou 60 Hz une génératrice auxiliaire 4 d'un courant de faible intensité, de l'ordre de moins de 1/100 de l'intensité du courant du circuit principal, et de fréquence supérieure f1, par exemple d'un ordre de grandeur 10 à 20 fois plus élevé que celui de la fréquence industrielle. La génératrice principale à bobinage supraconducteur alimente les bornes 2 et 3 du circuit d'utilisation à travers un disjoncteur 7. La génératrice 1 à cette fréquence f1 est représentée uniquement par son inductance inverse Li sans force électromotrice. Ainsi le déphasage entre le courant et la tension à cette fréquence f1 ne dépend pas de la charge de la génératrice comme c'est le cas pour le système principal à 50 ou 60 Hz ; il est fixé uniquement par les éléments passifs inductance Li et capacitance C.

Si en plus on choisit la capacité de découplage C1 du condensateur 5 en série avec la génératrice auxiliaire 4 pour obtenir la résonance (de façon que

Li C1 $(2 \pi f1)^2 = 1$), la transition d'une phase se traduit par l'apparition d'une tension aux bornes de la source de courant correspondante. Cette tension détectée par le détecteur de tension 6 est transmise au disjoncteur 7, qui ouvre le circuit alimentant les bornes 2, 3 du réseau d'utilisation.

Pour protéger le réseau des perturbations que pourraient entraîner les courants de mesure, on dispose entre la génératrice principale et le réseau un circuit bouchon pour la fréquence f1, formé de l'inductance 8 et de la capacitance 9.

Si on n'est pas à la résonance entre l'inductance inverse de la génératrice principale et la capacité en série avec la génératrice auxiliaire, la détection de transitions dans les conducteurs des bobinages s'effectuera par la détection du changement de déphasage entre le courant et la tension auxiliaire.

La protection proprement dite du bobinage supraconducteur alternatif ne peut pas être assurée par une résistance de décharge classique, à cause des pertes importantes en régime de fonctionnement normal dues à la tension aux bornes du bobinage.

La figure 2 représente un dispositif de protection dans lequel la détection d'une transition assure le déclenchement d'un triac 10 disposé en parallèle avec l'induit de la génératrice principale associé à une résistance de décharge 11. Le déclenchement de ce triac peut être provoqué avant ou en même temps que l'ouverture du disjoncteur principal 7.

On peut aussi assurer la protection du bobinage supraconducteur comme représentée en figure 3, à l'aide d'une varistance 12, disposée en parallèle avec les bobinages à protéger.

**Revendications**

1. Dispositif de détection de transitions de conducteurs de l'état supraconducteur à l'état normal dans un bobinage supraconducteur parcouru par un courant à fréquence industrielle, notamment pour induit de génératrice électrique (1), le dispositif comprenant des moyens détecteurs d'une variation de déphasage entre courant et tension dans le bobinage supraconducteur, caractérisé en ce qu'il comporte une génératrice auxiliaire (4) d'un courant d'intensité plus faible que celle du courant principal parcourant le bobinage et de fréquence plus élevée que la fréquence industrielle, monophasé ou polyphasé selon que le courant principal parcourant le bobinage est monophasé ou polyphasé, montée en parallèle avec le bobinage supraconducteur, lesdits moyens détecteurs (5, 6) détectant, à la fréquence du courant auxiliaire, la variation du déphasage entre intensité et tension du courant auxiliaire lorsque des conducteurs de ce bobinage passent à l'état normal, ces moyens détecteurs de variation de déphasage étant constitués par une capacité de découplage (5) en série avec la génératrice de courant auxiliaire (4), d'une valeur telle relativement à l'inductance inverse du bobinage supraconducteur qu'elle corresponde à la résonance à la fréquence du courant auxiliaire, et par des moyens (6) pour détecter l'apparition d'une tension aux bornes de la génératrice du courant auxiliaire.

2. Dispositif selon la revendication 1, caractérisé en ce qu'il comporte en outre un circuit bouchon (8, 9) pour la fréquence du courant auxiliaire, disposé entre la génératrice auxiliaire et le réseau relié au bobinage.

3. Dispositif de protection d'un bobinage supraconducteur à fréquence industrielle contre un échauffement excessif résultant du passage de conducteurs du bobinage à l'état normal, comprenant un interrupteur (7) commandé par le dispositif de détection de, transitions de conducteurs du bobinage à l'état normal, selon l'une des revendications 1 ou 2, caractérisé en ce qu'il comporte en outre un triac (10, fig.2) monté en série avec une résistance de décharge (11) et disposé en parallèle avec le bobinage à protéger, et commandé aussi par ledit dispositif de détection.

4. Dispositif de protection d'un bobinage supraconducteur à fréquence industrielle contre un échauffement excessif résultant du passage de conducteurs du bobinage à l'état normal, comprenant un interrupteur (7) commandé par le dispositif de détection de transitions de conducteurs du bobinage à l'état normal selon l'une des revendications 1 ou 2, caractérisé en ce qu'il comporte en outre une varistance (12, fig.3) en parallèle avec le bobinage à protéger.

**Claims**

1. A detection device for detecting transitions in conductors from the superconducting state to the normal state in a superconducting winding which carries a current at industrial frequency, particularly for a rotor winding of an electricity generator (1), the device comprising detection means for detecting a phase variation occuring between the current and the voltage in the superconducting winding, characterized in that it includes an auxiliary generator (4) for generating a current which is lower than the main current flowing through the winding and having a frequency which is higher than industrial frequency, said current being single-phase or multi-phase depending on whether the main current through the winding is single-phase or multi-phase, said auxiliary generator being connected in parallel with the superconductor winding, said detection means (5, 6) detecting at the frequency of the auxiliary current the change in phase difference between the auxiliary current and the auxiliary voltage which occurs when the conductors of said winding change to the normal state, said means for detecting variation in phase difference being constituted by a decoupling capacitor (5) in series with the auxiliary current generator (4), and having a value such that in relation to the inverse inductance of the superconducting winding said value corresponds to the resonance obtained at the frequency of the auxiliary current, and in that it includes means (6) for detecting the appearance of a voltage across the terminals of the auxiliary current generator.

2. A device according to claim 1, characterized in that it further includes a trap circuit (8, 9) at the frequency of the auxiliary current disposed between the auxiliary generator and the network connected to the winding.

3. A device for protecting a superconducting winding at industrial frequency against excessive heating due to conductors of the winding change over to the normal state comprising a breaker (7) actuated by the detection device for detecting transitions in conductors to the normal state, according to one of claims 1 or 2, characterized in that it furhter comprises a triac (10, fig. 2) connected in series with a discharge resistance (11) and disposed in parallel with the winding to be protected, and also being actuated by said detection device.

4. A device for protecting a superconducting winding at industrial frequency against excessive heating due to the conductors of the winding change over to the normal state comprising a breaker (7) actuated by the detection device for detecting transitions in conductors to the normal state, according to one of claims 1 or 2, characterized in that it further comprises a varistor (12, fig. 3) connected in parallel with the winding to be protected.

**Patentansprüche**

1. Einrichtung zur Erfassung der Übergänge von Leitern vom supraleitenden Zustand in den Normalzustand in einer von einem Strom mit Netzfrequenz durchflossenen supraleitenden Wicklung, insbesondere für die Ankerwicklung eines elektrischen Generators (1), wobei die Einrichtung Mittel zur Erfassung der Phasenverschiebung zwischen dem Strom und der Spannung in der supraleitenden Wicklung aufweist, dadurch gekennzeichnet, daß die Einrichtung eine Hilfsankerwicklung (4) für einen Strom geringerer Stärke als der durch die Hauptwicklung fließenden Hauptstrom, und einer höheren Frequenz als der Netzfrequenz aufweist, wobei dieser Strom ein- oder mehrphasig ist, je nachdem, ob der durch die Hauptwicklung fließende Hauptstrom ein- oder mehrphasig ist, wobei die Hilfsankerwicklung der supraleitenden Wicklung parallelgeschaltet ist und die Erfassungsmittel (5, 6) die Veränderung der Phasenverschiebung zwischen Strom und Spannung des Hilfsstroms bei dessen Frequenz erfassen, wenn Leiter der Hauptwicklung in den Normalzustand übergehen, wobei die Mittel zur Erfassung der Veränderung der Phasenverschiebung aus einem in Reihe mit der Hilfsankerwicklung (4) geschalteten Entkopplungskondensator (5), der einen solchen Wert relativ zur inversen Induktivität der supraleitenden Wicklung besitzt, daß er bei der Frequenz des Hilfsstroms der Resonanz ergibt, und aus Mitteln (6) zur Erfassung des Auftretens einer Spannung an den Klemmen der Hilfsankerwicklung bestehen.

2. Einrichtung nach Anspruch 1, dadurch gekennzeichnet, daß sie weiter einen Sperrkreis (8, 9) für die Frequenz des Hilfsstroms aufweist, der zwischen der Hilfsankerwicklung und dem mit der Wicklung verbundenen Netz angeordnet ist.

3. Schutzeinrichtung für eine mit Netzfrequenz betriebene supraleitende Wicklung gegen eine übermäßige Erwärmung infolge des Übergangs von Leitern der Wicklung in den Normalzustand, wobei die Einrichtung einen Trennschalter (7) aufweist, der von der Einrichtung zur Erfassung der Übergänge der Leiter der Wicklung in den Normalzustand ausgelöst wird, nach Anspruch 1 oder 2, dadurch gekennzeichnet, daß sie weiter einen Zweiweg-Thyristor (10, Fig. 2) aufweist, der in Reihe mit einem Entladewiderstand (11) parallel zur zu schützenden Wicklung geschaltet ist und ebenfalls von der Erfassungseinrichtung ausgelöst wird.

4. Schutzeinrichtung für eine mit Netzfrequenz betriebene supraleitende Wicklung gegen eine übermäßige Erwärmung infolge des Übergangs von Leitern der Wicklung in den Normalzustand, wobei die Einrichtung einen Schalter (7) aufweist, der von der Einrichtung zur Erfassung der Übergänge von Leitern der Wicklung in den Normalzustand ausgelöst wird, nach Anspruch 1 oder 2, dadurch gekennzeichnet, daß sie weiter einen Varistor (12, Fig. 3) aufweist, der der zu schützenden Wicklung parallelgeschaltet ist.

# FIG.1

# FIG.2

# FIG.3